**Europäisches Patentamt**

**European Patent Office**

**Office européen des brevets**

(11) Veröffentlichungsnummer: **0 094 617**

**B1**

(12) **EUROPÄISCHE PATENTSCHRIFT**

(45) Veröffentlichungstag der Patentschrift:
**03.09.86**

(21) Anmeldenummer: **83104656.0**

(22) Anmeldetag: **11.05.83**

(51) Int. Cl.⁴: **B 65 G 47/14**

(54) **Ausrichtanordnung.**

(30) Priorität: **15.05.82 DE 3218465**

(43) Veröffentlichungstag der Anmeldung:
**23.11.83 Patentblatt 83/47**

(45) Bekanntmachung des Hinweises auf die Patenterteilung:
**03.09.86 Patentblatt 86/36**

(84) Benannte Vertragsstaaten:
**AT BE CH DE FR GB IT LI NL SE**

(56) Entgegenhaltungen:
**DE-A-2 163 041**
**DE-B-1 209 053**
**DE-C-279 069**
**GB-A-1 065 888**
**US-A-1 476 064**
**US-A-3 209 888**

(73) Patentinhaber: **Bayer Diagnostic + Electronic GmbH, Steinerstrasse 15, D-8000 München 70 (DE)**

(72) Erfinder: **Lackinger, Ernst, Kerschlacherstrasse 3, D-8000 Munchen 71 (DE)**
Erfinder: **Haug, Christa, Dipl.- Ing., Klenzestrasse 71, D-8000 Munchen 71 (DE)**

(74) Vertreter: **Geyer, Ulrich F., Dr. Dipl.- Phys., Steinerstrasse 15, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Ausrichtanordnung zum Ausrichten von Teilen mit einer sich um ihre Längsachse drehenden Trommel, einen im Mantel der Trommel parallel zur Trommellängsachse verlaufenden, ausgeschnittenen Schlitz und einer Transportvorrichtung, auf die die Teile fallen, und die sie einzeln aus der Trommel transportiert.

Eine Anordnung dieser Art ist aus der GB-A-1 065 888 bekannt um etwa Zuckerwürfel oder Bonbons hintereinander, also nicht nebeneinander oder übereinander einer Zähl- oder Verpackungsstation zuzuführen. Bruchstücke oder Teile, deren Abmessungen kleiner als die Standartabmessungen sind, werden hierbei ebenfalls hintereinander der Zähl- oder Verpackungsstation zugeführt. Bruchstücke oder Teile, deren Abmessungen kleiner als die Standartabmessungen der mit der Vorrichtung zur verarbeitenden Teile sind, können mit der bekannten Anordnung daher nicht ausgesondert werden. Darüberhinaus ist es mit der bekannten Anordnung nicht möglich, die auszurichtenden Teile so aus der Trommel herauskommen zu lassen, daß sie auf einer bestimmten Seite liegen. Teile, beispielsweise Teststreifen oder sogenannte Sticks, wie sie etwa für die Diagnostik in der Medizin, beispielsweise für Urin- oder Blutuntersuchungen, verwendet werden, werden üblicherweise in Behältern vertrieben bzw. transportiert, in denen sie ungeordnet liegen. Um derartige Teile, wie beispielsweise Teststreifen für die Diagnostik, automatisch behandeln oder untersuchen zu können, müssen diese Teile nicht nur in der richtigen Weise ausgerichtet sein, sondern insbesondere auch auf der richtigen Seite liegen, nämlich derart, daß sich die auf dem Streifen aufgebrachten Diagnostikplättchen auf der Oberseite der Teststreifen befinden. Erst danach können sie beispielsweise mittels photometrischen Einrichtungen automatisch ausgewertet werden.

Darüberhinaus befinden sich in dem Behälter unterschiedlich breite, insbesondere zu schmale oder zu kurze Streifen, die bei der Streifenfertigung anfallen. Das Aussondern der Streifen, die nicht die richtige Breite aufweisen, ist sehr aufwendig.

Der Erfindung liegt daher die Aufgabe zugrunde, eine Ausrichtanordnung zum Ausrichten von Teilen, beispielsweise von Teststreifen für die medizinische Diagnostik zu schaffen, die nicht nur einer Ausrichtung der Teile, sondern gleichzeitig auf einfache Weise auch ein Aussortieren der nicht die richtigen Abmessungen aufweisenden Teile.

Diese Aufgabe wird erfindungsgemäß mit den kennzeichnenden Merkmalen des Anspruchs 1 gelöst.

Bei auszurichtenden Teilen, die auf einer Seite Unebenheiten aufweisen wird eine derartige Ausrichtung ermöglicht, daß die Teile auf der richtigen Seite liegen.

Bei sich drehender Trommel gelangt eines der sich in der Trommel befindlichen Teile automatisch in eine Stellung, in der es mit einer Seite an einem Anschlag anliegt und über den untersten Punkt des Anschlags hinaus vom Anschlag mitgenommen wird. In Drehrichtung gesehen nach dem Anschlag befindet sich ein Schlitz im Mantel der Trommel, wobei dieser Schlitz parallel zum Anschlag und zur Trommelachse verläuft. Der Schlitz ist mit einer Unterdruckerzeugungseinrichtung verbunden, so daß im Schlitz ein Vakuum erzeugt werden kann. Wenn sich eines der auszurichtenden Teile in der beschriebenen Lage nach dem Anschlag befindet, wird es bei Drehung der Trommel vom Anschlag mitgenommen. Bevor der Anschlag bzw. der Schlitz eine Drehung um einen Winkel von höchstens 45°, vom untersten Punkt aus gesehen, ausgeführt hat, wird die Unterdruckerzeugungseinrichtung mittels einer Steuerung eingeschaltet, so daß im Schlitz ein Unterdruck entsteht und das ausgerichtete Teil am Innenumfang des Zylindermantels aufgrund des Unterdrucks auch dann noch gehalten wird, wenn der Schlitz sich um einen Winkel grösser als 45°, vom untersten Punkt aus gesehen, dreht. Wenn sich der Schlitz bei der Trommelumdrehung im obersten Punkt befindet, wird die Unterdruckerzeugungseinrichtung ausgeschaltet und das zuvor am Schlitz anhaftende, ausgerichtete Teil fällt nach unten auf eine Transporteinrichtung, mit der die ausgerichteten Teilchen einzeln und nacheinander aus der Trommel transportiert und einer weiteren Verarbeitung- bzw. Untersuchungsstation zugeführt werden.

Die erfindungsgemäße Anordung ermöglicht also eine automatische Ausrichtung der ungeordnet in der Trommel liegenden Teile, die dann einzeln und nacheinander mittels einer Transporteinrichtung weiteren Verarbeitung- bzw. Untersuchungsstationen in ausgerichteter Lage zugeführt werden können.

Die erfindungsgemäße Anordung ermöglicht also nicht nur eine automatische Ausrichtung der ungeordnet in der Trommel liegenden Teile, die dann einzeln und nacheinander mittels einer Transporteinrichtung weiteren Verarbeitungs- bzw. Untersuchungsstationen in ausgerichteter Lage zugeführt werden können, sondern insbesondere auch ein einfaches Aussortieren von nicht die richtigen Abmessungen aufweisenden Teilen in der Gesamtheit der auszurichtenden Teile und nicht zuletzt die Ausrichtung der Teile, beispielsweise von Teststreifen, auf eine bestimmte Seite der Teststreifen, etwa dann, wenn die Teststreifen aufgebrachte Diagnostikplättchen auf der Oberseite aufweisen.

Gemäß einer bevorzugten Ausführungsform der Erfindung sind Steuerelemente auf dem Außenumfang der Trommelvorgesehen, die von Abfühleinrichtungen abgefühlt, z.B. optimal abgetastet, werden. Die Abfühleinrichtungen geben ein Signal ab, mit denen die Unterdruck-Erzeugungseinrichtung zum Ein- und Ausschalten des Unterdrucks gesteuert wird.

Vorzugsweise sind die Steuerelemente auf dem Außenumfang der Trommel Streifen mit unterschiedlicher Schwärzung, und die Abfühleinrichtungen sind Lichtschalter, die in Abhängigkeit von einer Änderung der Schwärzung Steuersignale für das Ein- und Ausschalten der Unterdruck-Erzeugungseinrichtungen abgeben.

Bei einer weiteren bevorzugten Ausführungsform der Erfindung wird die Unterdruck-Erzeugungseinrichtung von den Steuerelementen und den Abfühleinrichtungen so gesteuert, daß der Unterdruck dann eingeschaltet wird, wenn sich der Schlitz in Drehrichtung und vom untersten Punkt aus gesehen in einem Winkel von 20° - 40° und vorzugsweise von 25° - 35° befindet. Dadurch ist sichergestellt, daß das mit einer Seite an dem Anschlag anliegende Teil durch das Mitnehmen des Teils durch den Anschlag in der richtigen Lage liegt, bevor das Teil durch den Unterdruck in seiner Lage festgehalten wird. Wenn sich die Trommel weiter dreht und der Unterdruck-Schlitz vom untersten Punkt aus gesehen über 45° hinaus anlangt, bleibt das ausgerichtete Teil in der richtigen Lage am Unterdruckschlitz haften und dreht sich in der richtigen Lage mit dem Trommelmantel mit, bis es den obersten Punkt erreicht, d.h. bis es mit der Trommel um 180° vom untersten Punkt aus mitgenommen ist. Zu diesem Zeitpunkt wird die Unterdruck-Erzeugungseinrichtung durch die Steuerelemente und die Abfühleinrichtungen abgeschaltet, so daß der Unterdruck im Unterdruckschlitz zusammenbricht und das mitgenommene Teil in einer definierten Ausrichtung und Lage auf eine Fördereinrichtung fällt, die das Teil aus der Trommel zu einer weiteren Bearbeitungs- oder Untersuchungsstation automatisch in der richtigen Ausrichtung befördert.

Der Unterdruckschlitz ist normalerweise über eine elastische Leitung, beispielsweise einen Kunststoffschlauch, mit der Unterdruck-Erzeugungseinrichtung, etwa einer Vakuumpumpe verbunden. Wenn sich die Trommel ständig in der gleichen Richtung dreht, was gemäß dem Prinzip der vorliegenden Erfindung möglich ist, wickelt sich der Unterdruckschlauch auf. Gemäß einer weiteren vorteilhaften Ausgestaltung der Erfindung wird dies dadurch vermieden, daß die Drehung der Trommel durch entsprechende Steuerung gestoppt wird, wenn der Schlitz und damit das ausgerichtete, durch den Unterdruck im Schlitz gehaltene Teil den obersten Punkt erreicht hat und das am Schlitz anhaftende, ausgerichtete Teil durch Ausschalten des Unterdrucks auf die Transporteinrichtung gefallen ist. Nach Ausschalten der Drehbewegung in der Drehrichtung, in der das Teil vom Anschlag mitgenommen wurde, wird der Trommelantrieb umgeschaltet, so daß sich die Trommel in Gegenrichtung soweit dreht, daß der Anschlag bei der Drehung in Gegenrichtung mindestens über den unteren Punkt gedreht wird. Danach wird der Trommelantrieb vom Neuen umgeschaltet, so daß sich die Trommel wieder in der zuerst beschriebenen Drehrichtung dreht und ein neues Teil ausgerichtet und mitgenommen wird. Die Trommel führt daher eine Hin- und-her-Drehbewegung aus, die mindestens 180° beträgt, so daß das Aufwickeln und Abreißen des Vakuumschlauchs vermieden wird.

Es ist selbstverständlich möglich, gewünschtenfalls im Trommelmantel mehrere Vakuumschlitze und entsprechend mehrere Anschläge vorzusehen, so daß während einer Drehung der Trommel in einer Richtung mehrere Teile ausgerichtet und in ausgerichteter Lage auf die Transporteinrichtung abgelegt werden. Wenn die auszurichtenden Teile auf einer Seite Unebenheiten aufweisen, wie dies beispielsweise bei Teststreifen der Fall ist, bei denen auf einer Seite erhabene Plättchen angebracht sind, erfolgt durch die erfindungsgemäße Ausrichtanordnung automatisch eine Ablage der Teile auf eine definierte Seite. Wenn nämlich die Seite des Teils, die die Unebenheiten aufweist, bei sich drehender Trommel auf dem Vakuumschlitz zu liegen kommt, entsteht kein ausreichender Unterdruck, um das Teil am Innenumfang des Zylindermantels zu halten, wenn der Schlitz vom untersten Punkt aus gesehen über 45° hinaus nach oben bewegt wird. Die auf der falschen Seite liegenden Teile fallen daher ins Innere der Trommel zurück, bevor der Unterdruckschlitz den obersten Punkt in der Trommel erreicht hat.

Die Erfindung wird nachfolgend an Hand der Figuren beispielsweise näher erläutert. Es zeigen:

Fig. 1 eine schematische Darstellung der wesentlichsten Teile der erfindungsgemäßen Ausrichtvorrichtung in perspektiver Darstellung und

Fig. 2 einen Querschnitt durch die in Figur 1 schematisch dargestellte Anordnung entlang der Schnittlinie I-I.

Die vorliegende Erfindung soll unter Bezugnahme auf die Figuren am Beispiel der Ausrichtung von Teststreifen erläutert werden, wie sie in der medizinischen Diagnostik verwendet werden.

Die Teststreifen werden vom Hersteller in einen Behälter geliefert, in dem die Teststreifen völlig ungeordnet und durcheinander liegen. Darüberhinaus befinden sich in dem Behälter Produktabfälle und Streifen, die schmaler als die geforderte Breite sind.

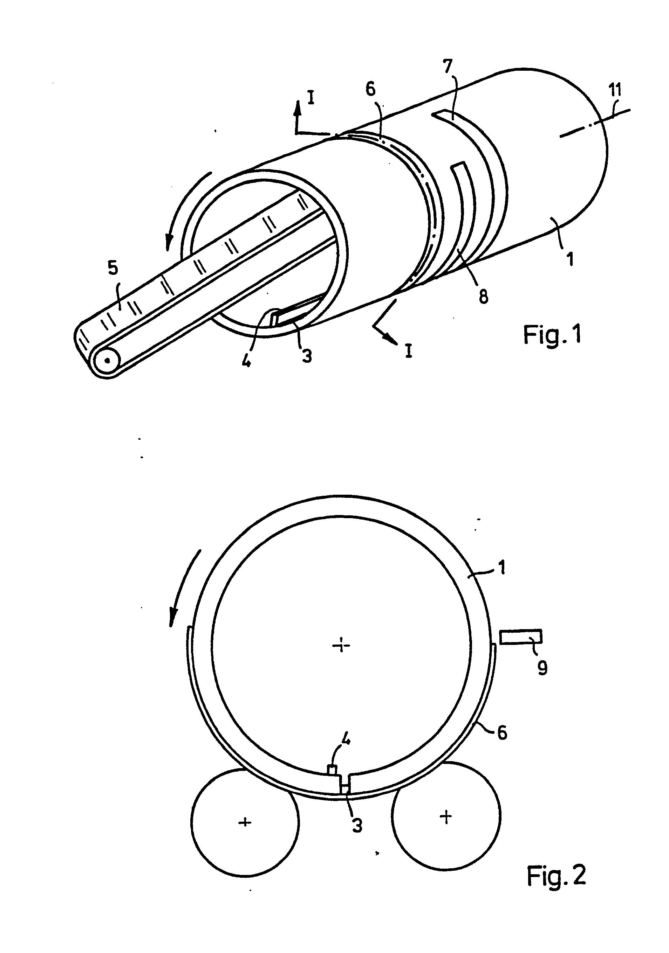

Die Teststreifen werden aus dem Transportbehälter mitsamt den Rückständen und den zu schmalen Teststreifen in die Trommel 1 geschüttet. Danach wird die Trommel mittels eines nicht dargestellten Antriebsmechanismus in der in Figur 1 angedeuteten Drehrichtung gedreht. Ein Anschlag 4 nimmt bei der Drehung eines der Teststreifen mit, das nach dem Anschlag 4 liegt. Aufgrund der Schwerkraft richtet sich der Teststreifen bei der Drehung so aus, daß eine Kante des Teststreifens voll am Anschlag 4 anliegt, wodurch der Teststreifen parallel zum Anschlag 4 ausgerichtet wird. Nach einer Drehung von etwa 0° bis 45° wird die nicht dargestellte Unterdruckerzeugungseinrichtung eingeschaltet, so daß in einem Schlitz 3 ein Unterdruck entsteht. Der Schlitz 3 befindet sich in Drehrichtung der Trommel gesehen nach dem Anschlag 4 und damit unterhalb des bereits ausgerichteten Teststreifens. Durch den Unterdruck im Schlitz 3 haftet der Teststreifen am Innenumfang der Trommel auch dann noch an, wenn sich der Unterdruckschlitz 3 und der Anschlag 4 vom untersten Punkt aus gesehen über 45° hinaus nach oben dreht. Wenn der Schlitz 3 bei der Drehung der Trommel 1 den obersten Punkt erreicht hat, wird die Unterdruck-Erzeugungseinrichtung ausgeschaltet, so daß der Unterdruck im Unterdruckschlitz 3 verschwindet. Dadurch fällt der zuvor am Unterdruckschlitz 3 haftende Teststreifen in definierter Ausrichtung auf eine Transporteinrichtung 5, die sich direkt unterhalb des in seiner obersten Stellung stehenden Unterdruckschlitzes 3 befindet. Die Transporteinrichtung transportiert dann die auf sie fallenden Teststreifen einzeln und nacheinander aus der Trommel 1 heraus und zu weiteren Verarbeitungs- bzw. Untersuchungsstationen, beispielsweise zu einer photometrischen Auswerteanordnung, und zwar in einer definiert ausgerichteten Lage.

Teststreifen, die zu kurz oder zu schmal sind, oder sonstige bei der Teststreifenherstellung anfallende Abfälle bedecken den Vakuumschlitz 3 nicht vollständig, so daß im Vakuumschlitz 3 kein ausreichend tiefer Unterdruck entstehen kann. Daher fallen diese schmaleren oder kürzeren Teststreifen vom Vakuumschlitz 3 in den Innenraum der Trommel 1 zurück, bevor der Unterdruckschlitz 3 seinen obersten Punkt erreicht hat. Die schmaleren oder kürzeren Teststreifen gelangen daher nicht auf die Transporteinrichtung 5 und verbleiben als Rückstände in der Trommel 1.

Mit der erfindungsgemäßen Ausrichtanordnung ist es also nicht nur möglich, Teststreifen in gewünschter Weise auszurichten, sondern auch diese von kürzeren oder schmaleren Teststreifen zu trennen.

Üblicherweise werden Teststreifen verwendet, auf denen Reaktionsplättchen auf nur einer Seite angebracht sind. Diese Reaktionsplättchen stehen etwas von der eigentlichen Teststreifenunterlage ab, so daß eine nicht gleichmäßige, sondern unterbrochene Fläche auf dieser Seite entsteht. Fällt nun ein Teststreifen mit der unterbrochenen, die Reaktionsplättchen aufweisenden Fläche auf den Schlitz 3, so kann sich wiederum kein ausreichend niederer Unterdruck im Unterdruckschlitz 3 aufbauen. Infolgedessen fallen diese, auf der falschen Seite liegenden Teststreifen in das Innere der Trommel 1 zurück, bevor der Unterdruckschlitz 3 den obersten Punkt in der Trommel erreicht hat. Es fallen also nur Teststreifen mit einer definierten, richtigen Seite auf die Transporteinrichtung 5, so daß zusätzlich zur Ausrichtung der Teststreifen diese auch nur mit der richtigen Seite nach oben aus der Trommel 1 transportiert werden.

Es ist selbstverständlich möglich, am Trommelinnenmantel mehrere Unterdruckschlitze 3 und entsprechend mehrere Anschläge 4 vorzusehen, so daß während einer Drehung mehrere Teststreifen auf der Transporteinrichtung 5 in der richtigen Ausrichtung und gegebenenfalls mit der richtigen Seite anfallen.

Zur Steuerung des Ein- und Ausschaltens der Unterdruckerzeugungseinrichtung sind am Außenumfang der Trommel 1 Streifen 6, 7, 8 vorgesehen, die gegenüber der Außenfläche der Trommel 1 eine unterschiedliche Schwärzung aufweisen. Eine Abfühleinrichtung 9, beispielsweise ein Lichtsensor stellt den Beginn und/ oder das Ende des Streifens fest und erzeugt in Abhängigkeit davon ein Signal, mit dem das Ein- und Ausschalten der Unterdruck-Erzeugungseinrichtung in der richtigen Weise gesteuert wird. Selbstverständlich ist es auch möglich, die Steuerung für das Ein- und Ausschalten der Unterdruck-Erzeugungseinrichtung auf andere Weise vorzunehmen.

Da zwischen dem Unterdruckschlitz und der Unterdruck-Erzeugungseinrichtung, beispielsweise einer Vakuumpumpe, eine Verbindung etwa in Form eines Vakuumschlauches vorhanden sein muß, würde dieser Vakuumschlauch abgedreht werden, wenn sich die Trommel 1 ständig nur in einer Richtung dreht. Daher wird die Antriebseinrichtung für die Drehbewegung der Trommel 1 so gesteuert, daß sich die Trommel wieder in Gegenrichtung dreht, nachdem der Unterdruckschlitz (3) den obersten Punkt erreicht hat, der Unterdruck ausgeschaltet wurde und der Teststreifen auf die Transporteinrichtung 5 abgelegt ist. Die Trommel 1 dreht sich dann in Gegenrichtung wieder in die Ausgangsstellung, d.h. mindestens soweit, daß der Unterdruckschlitz 3 und der Anschlag 4 in Drehgegenrichtung gesehen über den untersten Punkt hinaus gedreht wird. Danach wird wiederum die Drehrichtung der Trommel 1 umgeschaltet und der Ausricht- und Sortiervorgang beginnt von neuem.

Das Umschalten der Drehrichtung der Trommel 1 kann ebenfalls durch entsprechende Steuerelemente, wie Streifen mit unterschiedlicher Schwärzung und entsprechenden Abfühleinrichtungen, wie etwa Lichtsensoren gesteuert werden.

Die vorliegende Erfindung ist selbstverständlich nicht auf die Verwendung in Zusammenhang mit der Ausrichtung von Teststreifen beschränkt. In entsprechender Weise können auch andere Teile ausgerichtet und/oder sortiert werden.

**Patentansprüche**

1. Ausrichtanordnung zum Ausrichten von Teilen mit
- einer sich um ihre Längsachse drehenden Trommel (1),
- einem im Mantel der Trommel (1) parallel zur Trommellängsachse (2) verlaufenden, ausgeschnittenen Schlitz (3) und
- einer Transportvorrichtung (5), auf die die Teile fallen, und die sie einzeln aus der Trommel (1) transportiert,
<u>gekennzeichnet durch</u>
- einen parallel zum Schlitz (3) im Trommel-Innenumfang verlaufenden, in der Nähe des Schlitzes (3) und in Drehrichtung der Trommel (1) gesehen vor diesem angeordneten Anschlag (4),
- eine Einrichtung zur steuerbaren Erzeugung eines Unterdrucks derart, daß der Unterdruck eingeschaltet wird, wenn sich der Schlitz (3) bei sich drehender Trommel (1) vom untersten Punkt des Schlitzes (3) aus gesehen in einem Winkel zwischen 0 und 45° befindet, und daß der Unterdruck ausgeschaltet wird, wenn der Schlitz (3) den obersten Punkt bei der Trommeldrehung erreicht.

2. Ausrichtanordnung nach Anspruch 1, gekennzeichnet durch Steuerelemente, die auf dem Außenumfang der Trommel (1) vorgesehen sind, von Abfühleinrichtungen (9) abgefühlt werden und die Unterdruck-Erzeugungseinrichtung zum Ein- und Ausschalten des Unterdrucks steuern.

3. Ausrichtvorrichtung nach Anspruch 2, dadurch gekennzeichnet, daß die Steuerelemente auf den Außenumfang der Trommel (1) Streifen mit unterschiedlicher Schwärzung und die Abfühleinrichtungen (9) Lichtsensoren sind.

4. Ausrichtvorrichtung nach einem der Ansprüche 1 bis 3, dadurch gekennzeichnet, daß die Unterdruckerzeugungseinrichtung eingeschaltet wird, wenn sich der Schlitz (3) bei sich drehender Trommel (1) vom untersten Punkt des Schlitzes (3) aus gesehen in einem Winkel von 20 bis 40 und vorzugsweise von 25° bis 30° befindet.

5. Ausrichtvorrichtung nach einem der Ansprüche 1 bis 4, dadurch gekennzeichnet, daß sich die Trommel um einen Drehwinkel von mindestens 180° hin und her dreht.

6. Transportvorrichtung nach einem der Ansprüche 1 bis 5, dadurch gekennzeichnet, daß zur Umschaltung der Drehvorrichtung der Trommel (1) Steuerelemente (6, 7, 8) auf den Außenumfang der Trommel (1) sowie Abfühleinrichtungen (9) vorgesehen sind.

**Revendications**

1. Installation d'orientation pour orienter des pièces comportant:
- un tambour (1) qui tourne autour de son axe longitudinal,
- une fente (3) découpée dans la paroi cylindrique du tambour (1) et s'étendant parallèlement à l'axe longitudinal (2) du tambour et
- un dispositif de transport (5) sur lequel les pièces tombent et qui les transporte individuellement hors du tambour (1), caractérisée par:
- une butée (4) s'étendant dans la périphérie interne du tambour parallèlement à la fente (3) et disposée au voisinage de la fente (3) et après celle-ci, vu suivant le sens de rotation du tambour (1),
- une installation pour la production, avec possibilité de commande, d'une dépression de façon que la dépression soit mise en service lorsque la fente (3) se trouve placée, lorsque le tambour (1) tourne, sous un angle compris entre 0 et 45°, vu à partir du point le plus bas de la fente (3), et que la dépression soit mise hors service lorsque la fente (3) atteint le point le plus haut lors de la rotation du tambour.

2. Installation d'orientation selon la revendication 1, caractérisée en ce que des éléments de commande, qui sont prévus sur la périphérie externe du tambour (1), sont détectés par des dispositifs de détection (9) et commandent l'installation de production de vide en vue de la mise en et hors service de la dépression.

3. Installation d'orientation selon la revendication 2, caractérisée en ce que les éléments de commande prévus sur la périphérie externe du tambour (1) sont des bandes présentant un noircissement différent et les dispositifs de détection (9) sont des détecteurs optiques.

4. Installation d'orientation selon l'une quelconque des revendications 1 à 3, caractérisée en ce que l'installation de production de vide est mise en service lorsque la fente (3) se trouve, lorsque le tambour (1) tourne, sous un angle de 20° à 40° et de préférence de 25° à 30°, vu à partir du point le plus bas de la fente (3).

5. Installation d'orientation selon l'une quelconque des revendications 1 à 4, caractérisé en ce que le tambour oscille d'un angle de rotation d'au moins 180°.

6. Installation de transport selon l'une des revendications 1 à 5, caractérisée en ce que, pour l'inversion du sens de rotation du tambour (1), il est prévu des éléments de commande (6, 7, 8) situés sur la périphérie externe du tambour (1), ainsi que des dispositifs de détection (9).

**Claims**

1. An orientation arrangement for orientating parts having a drum (1) rotating about its longitudinal axis, a groove (3) cut into the shell of the drum (1) and running parallel to the longitudinal axis (2) of the drum and a transport device (5) onto which the parts fall and which transports them out of the drum (1), characterised in that there is provided a stop (4) running parallel to the groove (3) along the inner periphery of the drum, the stop being disposed in the proximity of the groove and in front of it when viewed in the direction of rotation of the drum (1) and a device for the controllable generation of a vacuum such that a vacuum is generated when the groove (3) is located during rotation of the drum at an angle of between 0 and 45° from the lowest point of the groove (3), and that the vacuum is switched off when the groove (3) reaches the uppermost point during rotation of the drum.

2. An orientation arrangement as in Claim 1, characterised by control elements provided on the outer periphery of the drum (1) which are sensed by sensing devices (9) and which control the switching on and off of the vacuum generating device.

3. An orientation arrangement as in Claim 2, characterised in that the control elements on the outer periphery of the drum (1) are strips of varying darkness and the sensing devices (9) are light sensors.

4. An orientation arrangement as in one of Claims 1 to 3, characterised in that the vacuum generating device is switched on when the groove (3) is located at an angle of 20° to 40° and preferably 25° to 30° from the lowest point of the groove (3) during rotation of the drum (1).

5. An orientation device as in one of Claims 1 to 4, characterised in that the drum rotates back and forth about angle of rotation of at least 180°.

6. A transport device as in one of Claims 1 to 5, characterised in that control elements (6, 7, 8) on the outer periphery of the drum (1) and sensing devices (9) are provided for changing over the direction of rotation of the drum (1).

Fig. 1

Fig. 2